# EUROPÄISCHE PATENTANMELDUNG

(11) **EP 3 232 104 A1**
(43) Veröffentlichungstag der Anmeldung: **18.10.2017**
(21) Anmeldenummer: 16164801.9
(22) Anmeldetag: 12.04.2016
(51) Int. Cl.: F16L 5/04, A62C 2/06, E04G 15/06, H02G 3/04, H02G 3/22

(54) **VERFAHREN ZUM HERSTELLEN EINER BAUGRUPPE FÜR EINE LEITUNGSDURCHFÜHRUNG, BAUGRUPPE SOWIE VERFAHREN ZUR HERSTELLUNG EINER LEITUNGSDURCHFÜHRUNG**

(71) Anmelder: HILTI Aktiengesellschaft, 9494 Schaan (LI)
(72) Erfinder: Monden, Thomas, 87778 Stetten (DE); Mordau, Ulf, 86875 Waal (DE); Ayrle, Thomas, 86853 Langerringen (DE); Renner, Markus, 86438 Kissing (DE)
(74) Vertreter: Hilti Aktiengesellschaft Corporate Intellectual Property

(57) **Zusammenfassung**

Ein Verfahren zum Herstellen einer Baugruppe (10) für eine Leitungsdurchführung ist beschrieben, bei dem eine ein Brandschutzmodul (42) bildende Brandschutzmatte (12) der Größe der Leitungsdurchführung entsprechend abgelängt wird. Die Brandschutzmatte (12) weist ein flexibles Trägerelement auf, an dem ein Brandschutzband aus einem intumeszierenden Material befestigt ist. Die Brandschutzmatte (12) wird rundgeformt und die sich gegenüberliegenden Enden (32, 34) der Brandschutzmatte (12) werden über ein Verbindungsmittel (40) miteinander verbunden, sodass ein Brandschutzmodul (42) ausgebildet ist. Wenigstens ein separat von der Brandschutzmatte (12) ausgebildetes mechanisches Positionierungsmittel (14) wird an der Brandschutzmatte (12) befestigt, das derart eingerichtet ist, dass die Baugruppe (10) über das mechanische Positionierungsmittel an einer Wand oder einer Schalung befestigbar ist. Ferner sind eine Baugruppe (10) und ein Verfahren zur Herstellung einer Leitungsdurchführung beschrieben.

## Beschreibung

Die Erfindung betrifft ein Verfahren zum Herstellen einer Baugruppe für eine Leitungsdurchführung, eine Baugruppe für eine Leitungsdurchführung sowie ein Verfahren zur Herstellung einer Leitungsdurchführung mit einer Baugruppe in einem Bauteil.

Aus dem Stand der Technik sind Baugruppen zum Brandschutz bekannt, die in einem Bauteil eingegossen werden können, um dabei eine Leitungsdurchführung in einer Seitenwand oder einer Decke herzustellen. Generell werden solche Baugruppen als Cast-In-Produkte bezeichnet.

Des Weiteren sind andere Baugruppen bekannt, die zur Verwendung bei einer bestehenden Wand mit bereits vorgesehener Durchführung verwendet werden können. Solche Baugruppen werden als Drop-In-Produkte bezeichnet, die in einer als Decke ausgebildeten Wand eingesetzt werden.

Darüber hinaus sind wiederum andere Baugruppen bekannt, die zur Verwendung von Leitungsdurchführungen bei Seitenwänden eingesetzt werden. Solche Baugruppen werden als Wall-Sleeve-Produkte bezeichnet.

Üblicherweise ist demnach für jeden Anwendungsbereich eine bestimmte Art Baugruppe vorgesehen.

Darüber hinaus sind die bekannten Baugruppen vorkonfektioniert, das heißt, sie weisen eine vordefinierte Form auf, insbesondere Länge oder Durchmesser.

Der Nachteil dieser vorkonfektionierten Bauteile ist es, dass die Flexibilität stark eingeschränkt ist, wodurch der Anwender der Brandschutzprodukte bei der Planung der Rohr- und Kabelsysteme bereits die verfügbaren, vorkonfektionierten Baugruppen berücksichtigen muss. Änderungen während der Bau- bzw. Ausführungsphase können bei den vorkonfektionierten Baugruppen nicht mehr berücksichtigt werden, sodass das Brandschutzprodukt manuell abgelängt werden müsste, was jedoch zu einer Beschädigung des schützenden Materials führen kann.

Um diesen Nachteil zu beseitigen sind ferner Baugruppen bekannt, die eine Standardgröße aufweisen und abgelängt oder mit anderen Anbauteilen verlängert werden können. Dadurch ist zumindest eine gewisse Flexibilität am Einsatzort gegeben. Sofern es in der Bau- bzw. Ausführungsphase zu Änderungen kommt, können diese zumindest in einem gewissen Rahmen vorgenommen werden.

In Extremsituationen kann es jedoch weiterhin vorkommen, dass die Bauphase unterbrochen werden muss, bis neue vorkonfektionierte Bauteile mit der entsprechenden Größe bestellt und geliefert worden sind. Dies verzögert die Bauphase und somit das gesamte Bauvorhaben, was höhere Kosten zur Folge hat.

Darüber hinaus sind aus dem Stand der Technik sogenannte Rohrmanschetten bekannt, wie sie in der DE 101 38 726 A1 beschrieben sind, die um ein bestehendes Rohr gelegt werden. Diese Rohrmanschetten eignen sich jedoch nicht zum Eingießen in einem Bauteil, also als sogenanntes Cast-In-Produkt.

Die Aufgabe der Erfindung besteht daher darin, eine flexible Baugruppe für eine Leitungsdurchführung bereitzustellen, mit der eine Leitungsdurchführung in einfacher Weise hergestellt werden kann, insbesondere unabhängig vom Anwendungsgebiet.

Die Aufgabe wird erfindungsgemäß durch ein Verfahren zum Herstellen einer Baugruppe für eine Leitungsdurchführung gelöst, bei dem eine ein Brandschutzmodul bildende Brandschutzmatte der Größe der Leitungsdurchführung entsprechend abgelängt wird, wobei die Brandschutzmatte ein flexibles Trägerelement aufweist, an dem ein, insbesondere kontinuierliches, Brandschutzband aus einem intumeszierenden Material befestigt ist. Die Brandschutzmatte wird rundgeformt und die sich gegenüberliegenden Ränder der Brandschutzmatte werden über ein Verbindungsmittel miteinander verbunden, sodass ein Brandschutzmodul ausgebildet ist. Wenigstens ein separat von der Brandschutzmatte ausgebildetes mechanisches Positionierungsmittel wird an der Brandschutzmatte befestigt, das derart eingerichtet ist, dass die Baugruppe über das mechanische Positionierungsmittel an einer Wand oder einer Schalung befestigbar ist.

Ferner löst eine Baugruppe für eine Leitungsdurchführung die obige Aufgabe, wobei die Baugruppe wenigstens ein mechanisches Positionierungsmittel aufweist, das derart eingerichtet ist, dass die Baugruppe über das wenigstens eine mechanische Positionierungsmittel an einer Wand oder einer Schalung befestigbar ist. Die Baugruppe weist zudem ein im Wesentlichen zylinderförmiges Brandschutzmodul auf, das ein flexibles Trägerelement umfasst, an dem ein, insbesondere kontinuierliches, Brandschutzband aus einem intumeszierenden Material befestigt ist. Das Brandschutzmodul weist zwei sich gegenüberliegende Ränder auf, die sich in Umfangsrichtung des Brandschutzmoduls gegenüberliegen und über ein Verbindungsmittel miteinander verbunden sind. Im Wesentlichen zylinderförmig bedeutet dabei, dass nach dem Verbinden der zwei sich gegenüberliegende Ränder der Querschnitt des die Leitungsdurchführung bildenden Brandschutzbandes eine Kreisform aufweist, wovon auch ein Vieleck umfasst ist, dessen Außenhüllkreis kreisförmig ist. Das Verbindungsmittel kann ein separater Klebestreifen, ein Klettverschluss oder Ähnliches sein.

Der Grundgedanke der Erfindung besteht darin, eine flexible Baugruppe bereitzustellen, die hinsichtlich ihrer Größe der Leitungsdurchführung den Anforderungen vor Ort hergestellt werden kann, also insbesondere die Länge und/oder der Durchmesser der Figur. Eine Vorauswahl der benötigten Brandschutzprodukte muss demnach bei der Planungsphase zumindest hinsichtlich der Größe der Baugruppen nicht mehr vorgenommen werden, was die Planung erleichtert. Die Brandschutzmatte, die das Brandschutzmodul bildet, wird entsprechend erst vor Ort auf die entsprechende Länge bzw. Größe abgelängt und zu dem Brandschutzmodul geformt. Das Trägerelement der Brandschutzmatte bildet dabei die Hülse für die Baugruppe aus, sodass die Baugruppe eine gewisse Steifigkeit hat, die sicherstellt, dass die Baugruppe ihre Form beim Eingießen in einem Bauteil aufrecht hält.

Unter einem kontinuierlichen Brandschutzband ist ein Brandschutzband zu verstehen, das durchgehend ausgebildet ist, also keine Unterbrechungen aufweist. Das kontinuierliche Brandschutzband ist demnach nicht aus vielen einzelnen Elementen gebildet, die voneinander beabstandet sind. Alternativ, d.h. bei einem diskontinuierlichen Brandschutzband, kann das Brandschutzband beispielsweise aus einzelnen Streifen bestehen, welche aneinanderstoßen oder voneinander beabstandet sein können. Dabei sind insbesondere die Streifen so angeordnet, dass nach dem Verbinden der zwei sich gegenüberliegenden Ränder des Brandschutzbandes die Streifen, wodurch eine Leitungsdurchführung geschaffen wird, im Wesentlichen axial zur Leitungsdurchführung angeordnet sind. Hierdurch wird die Ausbildung der Leitungsdurchführung vereinfacht.

Bei den mechanischen Positionierungsmittel handelt es sich vorzugsweise um eigensteife, also mechanisch stabile Positionierungsmittel. Die Positionierungsmittel stellen eine mechanische Befestigung der Baugruppe an der Wand oder der Schalung sicher, sodass die Baugruppe mechanisch an der Schalung oder der Wand dauerhaft befestigt werden kann, wenn die Leitungsdurchführung hergestellt wird. Hierzu können die Positionierungsmittel Öffnungen aufweisen, durch die Befestigungsmittel wie Schrauben, Nägel oder ähnliches geführt werden können.

Ein Aspekt sieht vor, dass die Brandschutzmatte auf einer Rolle aufgerollt ist, von der sie zunächst abgerollt wird. Hierdurch lässt sich die Brandschutzmatte in kompakter Weise transportieren, sodass für mehrere Baugruppen benötigtes Material stets vor Ort vorhanden ist. Das Aufrollen der Brandschutzmatte ist möglich, da das Trägerelement trotz seiner stabilisierenden Wirkung flexibel ist.

In einer besonderen Ausführungsform dieses Aspekts ist ein Hilfsmittel vorsehen, das hilft die richtige Länge von der Rolle abzuschneiden. Bei dem Hilfsmittel kann es sich beispielsweise um eine Skala ähnlich einem Maßband handeln, mit der einfach die Länge des Brandschutzbandes an der erforderlichen Durchmesser angepasst werden kann. Alternativ können für verschiedene Durchmesser Markierungen auf der Außenseite aufgebracht werden.

Insbesondere werden die sich gegenüberliegenden Ränder des Brandschutzmoduls, also der rundgeformten Brandschutzmatte, über wenigstens einen separaten Klebestreifen miteinander verbunden. Hierdurch ist in einfacher Weise sichergestellt, dass die rundgeformte Brandschutzmatte ihre Form beibehält.

Der wenigstens eine Klebestreifen ist insbesondere an der zum Brandschutzband entgegengesetzten Seite des Trägerelements befestigt. Hierdurch ist sichergestellt, dass das intumeszierende Material des Brandschutzbands den Klebestreifen nicht lösen wird, wenn sich das intumeszierende Material ausdehnt.

Gemäß einer Ausführungsform ist das Positionierungsmittel ein flexibles Band, an dem wenigstens ein integriertes Befestigungselement vorgesehen ist, wobei das flexible Band abgelängt wird, bevor das Positionierungsmittel an der Brandschutzmatte befestigt wird. Das flexible Band dient zur Verbindung des Positionierungsmittels mit der Brandschutzmatte und stabilisiert die Baugruppe zusätzlich. Für die Befestigung des Positionierungsmittels an der Wand oder der Schalung ist dagegen das wenigstens eine Befestigungselement vorgesehen. Das am flexiblen Band angeordnete Befestigungselement kann hakenförmig oder als Winkelelement ausgebildet sein.

Insbesondere können mehrere Befestigungselemente vorgesehen sein, die in gleichen Abständen dem Umfang des Brandschutzmoduls folgend verteilt angeordnet sind. Hierdurch bieten sich mehrere Anbindungsmöglichkeiten für die Baugruppe an der Wand bzw. der Schalung.

In einer alternativen Ausführungsform weist das Positionierungsmittel wenigstens eine Flanschhülse auf, die insbesondere über eine Klips-, Schiebe- oder Schraubverbindung mit dem Brandschutzmodul verbunden ist. Die Flanschhülse stellt ein mechanisch stabiles, eigensteifes Positionierungsmittel dar, welches in einfacher Weise an einer Wand oder einer Schalung befestigt werden kann.

Die Flanschhülse ist vorzugsweise derart ausgebildet, dass sie einen umlaufenden Flansch aufweist, die von einem Kragen radial nach außen absteht und als eine Auflagefläche der Flanschhülse dient. Hierdurch ist es möglich, dass die Flanschhülse und das damit befestigte Brandschutzmodul in eine bereits vorhandene Öffnung oder Durchführung bzw. ein bereits vorhandenes Loch eingesetzt wird und an der Wand bzw. an der Schalung anliegt. Ein derartiges Produkt wird als Drop-In- bzw. Wall-Sleeve-Produkt bezeichnet, je nachdem ob es sich bei der Wand um eine Decke oder Seitenwand handelt.

Die Baugruppe mit einer Flanschhülse als Positionierungsmittel kann auch als Cast-In-Produkt verwendet werden, indem die Baugruppe zunächst über die Flanschhülse an einer bereits vorhandenen Wand oder einer Schalung positioniert wird und dann vom Gussmaterial umschlossen wird.

Insbesondere ist die Flanschhülse als ein Deckelelement mit einer Sollbruchstelle ausgebildet, über die ein Verschlussteil herausgebrochen werden kann. Das Verschlussteil schützt zunächst den von der Flanschhülse umgebenen Raum, der nachher Teil der Leitungsdurchführung ist, sodass kein Beton oder anderes Gussmaterial beim Gießen eintreten kann und den Querschnitt der Leitungsdurchführung verengt oder gar versperrt. Nach dem Gießen kann das Verschlussteil in einfacher Weise an der Sollbruchstelle mechanisch herausgebrochen werden, sodass die Leitungsdurchführung zugänglich ist.

Ein Aspekt sieht vor, dass das Trägerelement gegenüber dem Brandschutzband an den sich gegenüberliegenden Rändern des Brandschutzmoduls zurückgesetzt ist. Hierdurch ist sichergestellt, dass die Ränder des Brandschutzbands aneinander anstoßen, wenn die Brandschutzmatte rundgeformt ist, wodurch eine entsprechend gute Dichtwirkung des Brandschutzbandes sichergestellt ist. Da das Trägerelement zurückgesetzt ist, wird verhindert, dass die Ränder des Trägerelements aneinander anstoßen, wenn die Brandschutzmatte zum Brandschutzmodul rundgeformt wird, wodurch ein Spalt im Brandschutzband entstehen könnte, der die Funktion der Baugruppe beeinträchtigen würde.

Ein weiterer Aspekt sieht vor, insbesondere bei der Verwendung als Cast-In, dass das Trägerelement gegenüber dem Brandschutzband an zumindest dem Rand des Brandschutzmoduls, welcher später bei der Verwendung des Brandschutzmoduls an dem Untergrund anliegt, zurückgesetzt ist. Hierdurch ist sichergestellt, dass dieser Rand des Brandschutzbands dichtend an dem Untergrund anliegt. Da das Trägerelement zurückgesetzt ist, wird verhindert, dass der entsprechende Rand des Trägerelements an den Untergrund stößt, wenn die Brandschutzmatte als Cast-In verwendet und beispielsweise auf eine Verschalung aufgesetzt wird, wodurch ein Spalt zwischen dem Untergrund und dem Brandschutzband entstehen könnte, durch den beispielsweise Beton in das Innere des Brandschutzmoduls laufen könnte.

Hierbei können die beiden Aspekte einzeln oder in Kombination miteinander in einem Brandschutzmodul verwirklicht sein.

Gemäß einem weiteren Aspekt ist zwischen dem Trägerelement und dem Brandschutzband wenigstens ein zusätzlicher intumeszierender Streifen vorgesehen, der insbesondere an einem der sich gegenüberliegenden Ränder des Brandschutzmoduls vorgesehen ist und/oder über eine der Ränder des Trägerelements übersteht. Dieser zusätzliche Streifen stellt eine zusätzliche Sicherheitsfunktion dar, da das intumeszierende Material in diesem Bereich entsprechend stärker ausgebildet ist. Daher ist der zusätzliche Streifen bevorzugt an den Rändern der Brandschutzmatte vorgesehen, wo die Schnittstellen der Leitungsdurchführung zu den benachbarten Räumen ist oder an den sich gegenüberliegenden Rändern der rundgeformten Brandschutzmatte.

Vorzugsweise besteht das Brandschutzband aus Mineralwolle gefüllt mit Blähgraphit oder einem Brandschutzschaum. Dies sind besonders gut geeignete Materialen, die sowohl bei Cast-In-, Drop-In- oder Wall-Sleeve-Produkten zum Einsatz kommen können.

Das Brandschutzmodul ist insbesondere derart geformt, dass die sich gegenüberliegenden Ränder des Brandschutzmoduls aneinander anliegen. Demnach liegen keine überlappenden Bereiche vor, wenn die das Brandschutzmodul bildende Brandschutzmatte rundgeformt worden ist. Die beiden Ränder der abgelängten Brandschutzmatte liegen direkt aneinander an.

Insbesondere ist das wenigstens eine Positionierungsmittel an der zum Brandschutzband entgegengesetzten Seite des Trägerelements befestigt. Hierdurch ist sichergestellt, dass auf der Innenseite der Baugruppe lediglich das Brandschutzband angeordnet ist, wodurch deren Funktionen nicht durch andere Bauteile wie dem wenigstens einen Positionierungsmittel beeinträchtigt werden.

Das flexible Trägerelement ist insbesondere eine Folie, die vorzugsweise aus einem Kunststoff, einem Metall, einer Keramik oder einem Sinterwerkstoff, insbesondere aus einem Kunststoff oder einem Metall besteht. Hierdurch wird eine ausreichende Stabilität der Baugruppe erreicht, sofern die Brandschutzmatte rundgeformt bzw. zum Brandschutzmodul geformt ist. Die benötigte Flexibilität, die gewährleistet, dass die Brandschutzmatte auf einer Rolle aufgerollt werden kann, lässt sich in einfacher Weise über die Dicke des Trägerelements einstellen.

Des Weiteren betrifft die Erfindung ein Verfahren zur Herstellung einer Leitungsdurchführung mit einer Baugruppe der zuvor genannten Art in einem Bauteil, insbesondere einer Wand aus Beton, wobei die Baugruppe über das wenigstens eine Positionierungsmittel an der Wand oder der Schalung befestigt wird und das Brandschutzmodul beim Gießen des Bauteils von dem das Bauteil bildenden Gussmaterial, insbesondere von Beton, umschlossen wird. Alternativ wird die Baugruppe in ein Loch oder eine Durchführung des Bauteils eingesetzt und am Bauteil über das wenigstens eine Positionierungsmittel befestigt. Die Baugruppe kann demnach als Cast-In-, Drop-In- und Wall-Sleeve-Produkt verwendet werden.

Die Baugruppe ist demnach vielfältig einsetzbar, da die Baugruppe weder auf ein Anwendungsgebiet beschränkt, noch vorkonfektioniert ist. Sie kann vor Ort entsprechend dimensioniert und dann als Cast-In-Produkt, Drop-In- Produkt oder Wall-Sleeve-Produkt verwendet werden.

Weitere Vorteile und Eigenschaften der Erfindung ergeben sich aus der nachfolgenden Beschreibung und den Zeichnungen, auf die Bezug genommen wird. In den Zeichnungen zeigen:
- Figur 1: eine Übersicht der zur Herstellung der erfindungsgemäßen Baugruppe verwendeten Komponenten,
- Figur 2: eine Schnittdarstellung der verwendeten Brandschutzmatte,
- Figur 3: eine perspektivische Ansicht der erfindungsgemäßen Baugruppe gemäß einer ersten Ausführungsform,
- Figur 4: eine perspektivische Ansicht der erfindungsgemäßen Baugruppe gemäß einer zweiten Ausführungsform,
- Figur 5: eine perspektivische Ansicht der erfindungsgemäßen Baugruppe gemäß einer dritten Ausführungsform,
- Figur 6: eine perspektivische Ansicht der erfindungsgemäßen Baugruppe gemäß der ersten Ausführungsform in verbautem Zustand,
- Figur 7: eine perspektivische Ansicht der erfindungsgemäßen Baugruppe gemäß der zweiten Ausführungsform in verbautem Zustand,
- Figur 8: eine perspektivische Ansicht der erfindungsgemäßen Baugruppe gemäß der dritten Ausführungsform in verbautem Zustand,
- Figur 9: eine perspektivische Ansicht der erfindungsgemäßen Baugruppe gemäß einer vierten Ausführungsform in analoger Weise zur Figur 6 in verbautem Zustand,
- Figur 10: eine perspektivische Ansicht der erfindungsgemäßen Baugruppe gemäß einer fünften Ausführungsform in analoger Weise zur Figur 7 in verbautem Zustand, und
- Figur 11: eine perspektivische Ansicht der erfindungsgemäßen Baugruppe gemäß einer vierten Ausführungsform in analoger Weise zur Figur 8 in verbautem Zustand.

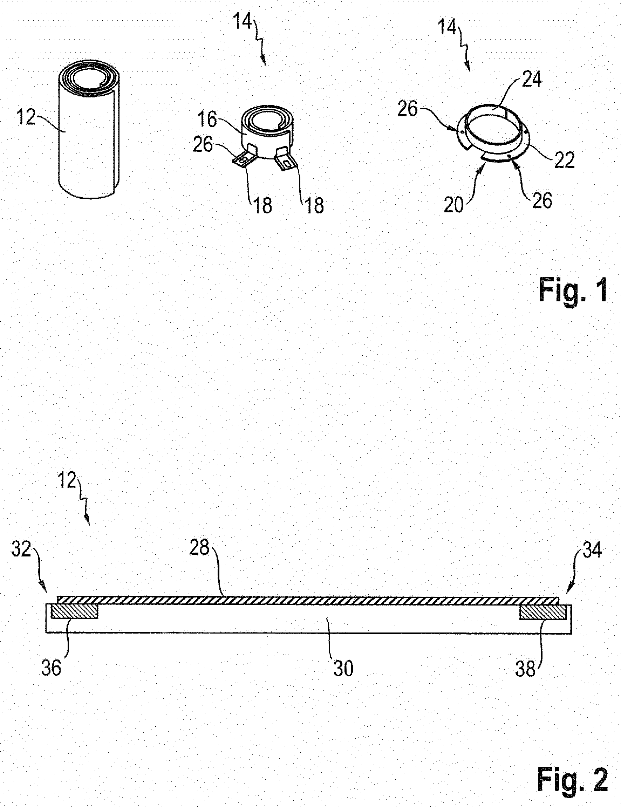

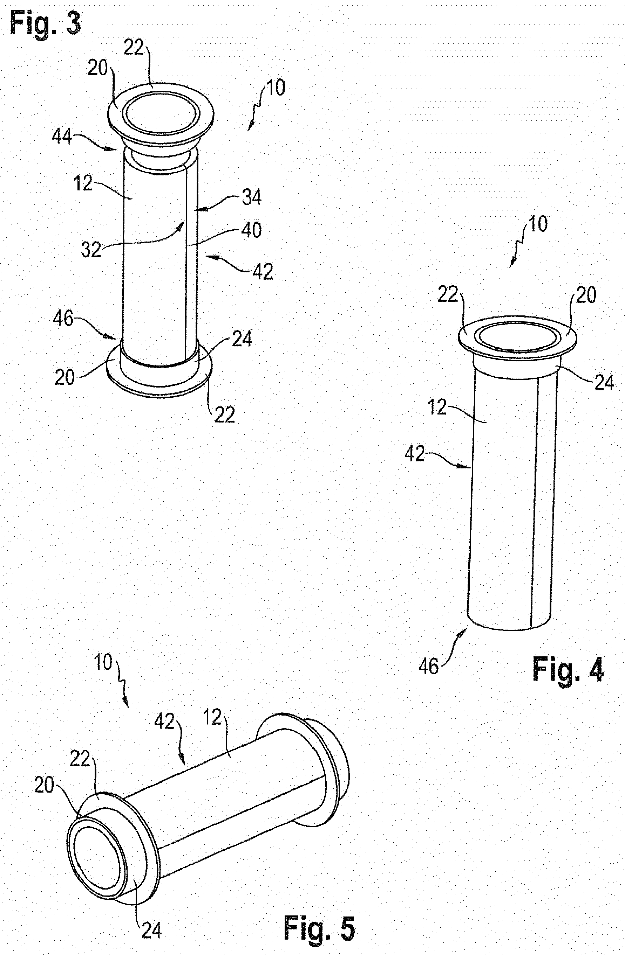

In Figur 1 sind die Komponenten dargestellt, die für die Herstellung einer Baugruppe 10 für eine Leitungsdurchführung in einer Seitenwand oder Decke eines Gebäudes benötigt werden, welche im hergestellten Zustand in den Figuren 3-5 gemäß unterschiedlicher Ausführungsformen dargestellt ist.

Bei den Komponenten handelt es sich um eine Brandschutzmatte 12, die in der gezeigten Ausführungsform auf einer Rolle aufgerollt ist und zur Baustelle geliefert wird. Der Aufbau der Brandschutzmatte 12 wird mit Bezug auf Figur 2 später erläutert.

Eine weitere Komponente der Baugruppe 10 ist ein von der Brandschutzmatte 12 separat ausgebildetes, mechanisches Positionierungsmittel 14, welches als ein flexibles Band 16 mit integrierten Befestigungselementen 18 oder als eine Flanschhülse 20 ausgebildet sein kann, wie nachfolgend noch erläutert wird.

Die Flanschhülse 20 ist aus einem Kunststoff gebildet, sodass es ein eigensteifes, mechanisch stabiles Positionierungsmittel 14 darstellt, welches in einfacher Weise an einer Wand oder einer Schalung befestigt werden kann.

Die Flanschhülse 20 weist einen umlaufenden Flansch 22 sowie einen davon im Wesentlichen senkrecht abstehenden, rohrförmigen Kragen 24 auf, der zur Aufnahme des Brandschutzmoduls 42 dient. In dem Flansch 22, der radial nach außen gerichtet vom Kragen 24 absteht, sind Öffnungen 26 vorgesehen, durch die ein Befestigungsmittel wie eine Schraube, ein Nagel oder ähnliches geführt werden kann, um die Flanschhülse 20 an der Wand oder der Schalung zu befestigen.

In der gezeigten Ausführungsform (siehe Figur 1) besteht die Flanschhülse 20 aus zwei Halbschalen, die jedoch über eine Klips-, Schiebe- oder Schraubverbindung miteinander verbunden sind, die aus Gründen der Übersichtlichkeit nicht dargestellt ist. Über die Klips-, Schiebe- oder Schraubverbindung lässt sich der Abstand der beiden Halbschalen der Flanschhülse 20 zueinander einstellen, wodurch der Querschnitt veränderbar ist. Insbesondere wird hierüber die Flanschhülse 20 an der Brandschutzmatte 12 befestigt, wie nachfolgend noch erläutert wird.

Das andere, alterative Positionierungsmittel 14, also das flexible Band 16 mit den Befestigungselementen 18, stellt ebenfalls ein eigensteifes Positionierungsmittel 14 dar, da das flexible Band 16 aus einem Kunststoff oder einem Metall gebildet ist, an dem die hakenförmig bzw. winkelförmig ausgebildeten Befestigungselemente 18 angebracht sind. Die Befestigungselemente 18 können in integraler Weise mit dem Band 16 verbunden oder nachträglich am flexiblen Band 16 befestigt worden sein. Das Band 16 und das wenigstens eine Befestigungsmittel 18 bilden zusammen das Positionierungsmittel 14 aus.

Die Befestigungselemente 18 weisen vorzugsweise ein Profil oder eine Verstärkungsstruktur auf, sodass sie mechanisch stabiler sind, insbesondere windungssteif. Die Verstärkungsstruktur kann durch Prägungen, Rippen und/oder Vertiefungen gebildet sein.

In den Befestigungselementen 18 sind ebenfalls Öffnungen 26 ausgebildet, über die das Positionierungsmittel 14 und somit die Baugruppe 10 später an einer Wand oder einer Schalung befestigt werden kann.

Generell weisen die Befestigungselemente 18 einen Verbindungsbereich und einen Positionierungsabschnitt auf, die insbesondere in einem im Wesentlichen rechten Winkel zueinander angeordnet sind. Über den Verbindungsbereich sind die Befestigungselemente 18 am Band 16 befestigt, wohingegen der Positionierungsabschnitt zur Befestigung des Positionierungsmittels 14 an der Wand oder der Schalung dient.

Demnach weisen die Befestigungselemente 18 jeweils einen Positionierungsabschnitt auf, der sich vom flexiblen Band 16 nach radial auswärts erstreckt, insbesondere in einem rechten Winkel zum Band 16.

In bevorzugter Weise ist die Verstärkungsstruktur am jeweiligen Positionierungsabschnitt der Befestigungselemente 18 vorgesehen.

Die Befestigungselemente 18 entsprechen somit im Wesentlichen dem umlaufenden Flansch 22 der Flanschhülse 20, wohingegen das flexible Band 16 dem Kragen 24 der Flanschhülse 20 entspricht.

Die Positionierungsmittel 14 werden jeweils mit der Brandschutzmatte 12 verbunden, die in Figur 2 in einer Schnittdarstellung gezeigt ist.

Die Brandschutzmatte 12 weist ein flexibles Trägerelement 28 auf, das als Folie ausgebildet ist und eine gewisse Steifigkeit aufweist. Das Trägerelement 28 ist aus einem Kunststoff oder aus einem Metall, also beispielsweise als ein dünnes Blech ausgebildet.

Am Trägerelement 28 ist ein Brandschutzband 30 aus einem intumeszierenden Material befestigt, insbesondere einer Mineralwolle gefüllt mit Blähgraphit oder einem Brandschutzschaum, der auch als Puma Schaum bezeichnet wird. Das Trägerelement 28 kaschiert das Brandschutzband 30 dabei vorwiegend nach außen hin.

Wie aus der Figur 2 hervorgeht, ist das Trägerelement 28 gegenüber dem Brandschutzband 30 an zwei entgegengesetzten Rändern 32, 34 zurückgesetzt, sodass das Trägerelement 28 das Brandschutzband 30 dort nicht kaschiert. Hierdurch liegen die Ränder des Brandschutzbands 30 aneinander an, wenn die Brandschutzmatte 12 rundgeformt wird, wie nachfolgend noch erläutert wird.

Des Weiteren ist in der gezeigten Ausführungsform dargestellt, dass an den Rändern 32, 34 jeweils ein zusätzlicher intumeszierender Streifen 36, 38 vorgesehen ist, der zwischen dem Trägerelement 28 und dem Brandschutzband 30 vorgesehen ist. Die zusätzlichen Streifen 36, 38 erstrecken sich dabei bis in den Bereich, in dem das Trägerelement 28 gegenüber dem Brandschutzband 30 zurückgesetzt ist, sodass die zusätzlichen Streifen 36, 38 zumindest teilweise die Außenschicht bilden.

Nachfolgend wird erläutert, wie aus den in Figur 1 gezeigten Komponenten die Baugruppe 10 gemäß einer der in den Figuren 3 bis 5 dargestellten Ausführungsformen hergestellt wird. Zunächst wird die Brandschutzmatte 12 von der Rolle abgerollt und entsprechend der Länge bzw. des Durchmessers der vorgesehenen Leitungsdurchführung abgelängt.

Anschließend wird die Brandschutzmatte 12 rundgeformt, sodass sich die in Figur 2 gezeigten Ränder 32, 34 gegenüberliegen.

Sofern das Trägerelement 28 in diesen Bereichen nicht bereits von der Rolle gegenüber dem Brandschutzband 30 zurückgesetzt ist, kann zunächst das Trägerelement 28 zurückgesetzt werden, bevor die Brandschutzmatte 12 rundgeformt wird.

Die sich gegenüberliegenden Ränder 32, 34 werden so angeordnet, dass sie aneinander anliegen und sich entsprechend berühren. Die sich gegenüberliegenden Ränder 32, 34 werden dann über ein Verbindungsmittel 40 miteinander verbunden, um ein Brandschutzmodul 42 herzustellen.

Bei dem Verbindungsmittel 40 kann es sich um ein Klebemittel, eine Schweißnaht oder einen separaten Klebestreifen handeln, der auf die Brandschutzmatte 12 geklebt wird, insbesondere auf das Trägerelement 28.

Im rundgeformten Zustand verleiht das Trägerelement 28 dem Brandschutzmodul 42 aufgrund seines Materials die benötigte Steifigkeit und dient als Hülse, durch die Leitungen, Kabel und ähnliches geführt werden können.

Nachdem das Brandschutzmodul 42 ausgebildet worden ist, wird das wenigstens eine Positionierungsmittel 14 an diesem befestigt.

In den Figuren 3 bis 5 ist die Flanschhülse 20 als Positionierungsmittel 14 verwendet worden, die jeweils in unterschiedlicher Weise am Brandschutzmodul 42 befestigt wird. Die Anbringungsart hängt dabei vom Anwendungsgebiet bzw. Verwendungszweck der Baugruppe 10 ab.

Die in Figur 3 gezeigte Baugruppe 10 wird als Cast-In-Produkt verwendet. Dementsprechend sind an den axialen Enden 44, 46 der rundgeformten Brandschutzmatte 12, also dem Brandschutzmodul 42, jeweils eine Flanschhülse 20 angeordnet.

Die Flanschhülsen 20 umschließen mit ihrem Kragen 24 die axialen Enden 44, 46 des Brandschutzmoduls 42. Anschließend können die beiden Halbschalen jeder Flanschhülse 20 über die Klips-, Schiebe- oder Schraubverbindung zusammengezogen werden, sodass sich der Querschnitt der Flanschhülse 20 verringert und die axialen Enden 44, 46 des Brandschutzmoduls 42 von der Flanschhülse 20 entsprechend eingeklemmt sind.

Die Befestigung der Flanschhülse(n) 20 am Brandschutzmodul 42 erfolgt in analoger Weise bei den anderen Baugruppen 10, die für die anderen Verwendungszwecke vorgesehen sind, also als Drop-In-Produkt (Figur 4) bzw. als Wall-Sleeve-Produkt (Figur 5).

Bei der Baugruppe 10 gemäß Figur 4 wird (zunächst) nur eine Flanschhülse 20 an einem axialen Ende 44 des Brandschutzmoduls 42 befestigt, sodass die Baugruppe 10 über das andere axiale Ende 46 in die bereits vorhandene Öffnung bzw. das bereits vorhandene Loch in einer Wand oder Decke eingeführt wird.

Der Flansch 22 der bereits befestigten Flanschhülse 20 am axialen Ende 44 dient dann als Auflagefläche an der Wand bzw. der Schalung für die Baugruppe 10.

Die in Figur 5 dargestellte Baugruppe 10 wird als Wall-Sleeve-Produkt verwendet. Dementsprechend sind die Flanschhülsen 20 um 180° gedreht an den axialen Enden 44, 46 angebracht im Vergleich zu den vorherigen Baugruppen, sodass die Baugruppe 10 über die Flansche 22 der jeweiligen Flanschhülsen 20 an der Wand oder der Schalung befestigt werden kann.

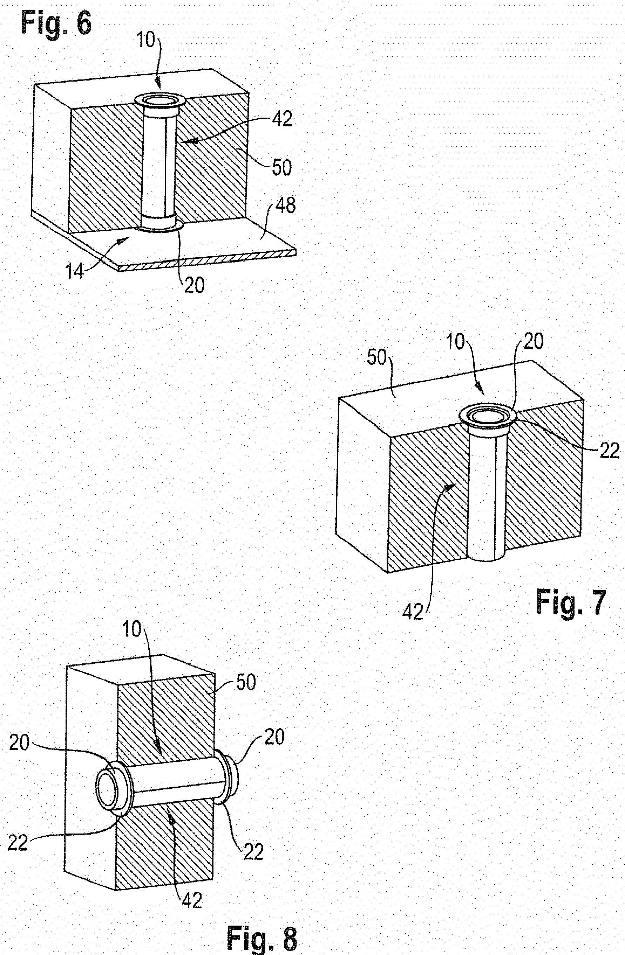

In den Figuren 6 bis 8 sind die in den Figuren 3 bis 5 gezeigten Baugruppen 10 jeweils im Einbauzustand dargestellt, wobei die Wand geschnitten ist.

In Figur 6 ist die als Cast-In-Produkt verwendete Baugruppe 10 zunächst über eine Flanschhülse 20 an einer Schalung 48 angebracht worden und anschließend ein Bauteil 50 hergestellt worden, das die Baugruppe 10 umschließt.

Bei dem Bauteil 50 handelt es sich um eine Wand aus Beton, insbesondere eine Decke, die gegossen worden ist, nachdem die Baugruppe 10 an der Schalung 48 angebracht wurde.

Die Flanschhülse 20 ist bei der Verwendung der Baugruppe 10 als Cast-In-Produkt vorzugsweise als ein Deckelelement ausgebildet, das ein Verschlusselement aufweist, welches über eine Sollbruchstelle herausgebrochen werden kann. Das Verschlusselement bildet einen Boden des Flanschs 20, d. h. die Flanschhülse 20 ist axial geschlossen. Dies verhindert, dass Beton oder ein anderes Gussmaterial beim Gießen des Bauteils 50 in den von der Baugruppe 10 umschlossenen Raum gelangt, der als Leitungsdurchführung dient.

In Figur 7 ist die als Drop-In-Produkt verwendete Baugruppe 10 in einer bereits bestehenden Öffnung oder Durchführung des Bauteils 50 eingesetzt worden, das als eine Decke ausgebildet ist. Die Baugruppe 10 liegt über dem Flansch 22 der Flanschhülse 20 auf der Decke auf.

In Figur 8 ist die als Wall-Sleeve-Produkt verwendete Baugruppe 10 in einer bereits bestehenden Öffnung oder Durchführung des Bauteils 50 eingesetzt worden, das als eine Seitenwand ausgebildet ist. Die Baugruppe 10 liegt über die Flansche 22 der beiden Flanschhülsen 20 an entgegengesetzten Seiten der Seitenwand an.

Sofern als Positionierungsmittel 14 das flexible Band 16 mit den Befestigungselementen 18 gewählt wird, wird das flexible Band 16 zunächst entsprechend der rundgeformten Brandschutzmatte 12 bzw. dem Brandschutzmodul 42 abgelängt und anschließend von außen angebracht, also an die zum Brandschutzband 30 entgegengesetzte Seite des Trägerelements 28, die auch als Außenseite bezeichnet wird.

Hierbei kann das Band 16 in einfacher Weise um das Brandschutzmodul 42 bzw. die rundgeformte Brandschutzmatte 12 gelegt werden, sodass das Band 16 das Brandschutzmodul 42 umschließt.

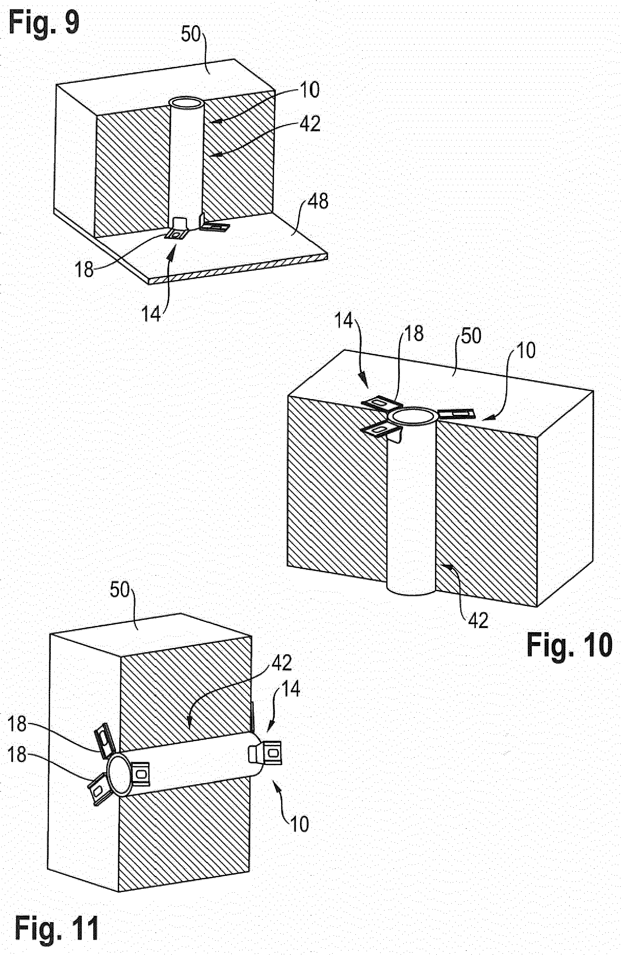

Die Baugruppe 10 mit dem Band 16 und den Befestigungselementen 18 als Positionierungsmittel 14 kann in analoger Weise zu den in den Figuren 3 bis 5 dargestellten Baugruppen 10 als Cast-In-, Drop-In- oder Wall-Sleeve-Produkt verwendet werden, wie insbesondere auch aus den Figuren 9 bis 11 hervorgeht, in denen eine entsprechende Baugruppe 10 bei der dem Anwendungsgebiet entsprechenden Verwendung gezeigt ist.

Die in Figur 9 dargestellte, eingebaute Baugruppe 10 entspricht im Wesentlichen derjenigen aus Figur 6, wobei das Band 16 mit den Befestigungselementen 18 als Positionierungsmittel 14 vorgesehen ist.

Die in Figur 10 dargestellte eingebaute Baugruppe 10 entspricht im Wesentlichen derjenigen aus Figur 7, wobei das Band 16 mit den Befestigungselementen 18 als Positionierungsmittel 14 vorgesehen ist.

Die in Figur 11 dargestellte eingebaute Baugruppe 10 entspricht im Wesentlichen derjenigen aus Figur 8, wobei das Band 16 mit den Befestigungselementen 18 als Positionierungsmittel 14 vorgesehen ist.

Die Anbringung der Baugruppen 10 erfolgt jedoch im Wesentlichen in analoger Weise, da die Befestigungselemente 18 im Wesentlichen dieselbe Funktion wie der umlaufende Flansch 22 der Flanschhülse 20 haben, sodass sie ebenfalls eine Auflagefläche für die Baugruppe 10 ausbilden.

Unabhängig vom gewählten Positionierungsmittel 14 wird stets sichergestellt, dass das Brandschutzmodul 42 seine vordefinierte Form beibehält, da die sich gegenüberliegenden Enden einerseits über das Verbindungsmittel 40 miteinander verbunden sind und andererseits die Form des Brandschutzmoduls 42 durch die Pressung bzw. das Einklemmen des Positionierungsmittels 14 aufrechterhalten wird.

Generell ist somit eine Baugruppe 10 geschaffen, die für drei unterschiedliche Anwendungsgebiete verwendet werden kann, das heißt, die Baugruppe 10 ist zur Verwendung als Cast-In-, Drop-In- oder Wall-Sleeve-Produkt geeignet.

## Patentansprüche

1. Verfahren zum Herstellen einer Baugruppe (10) für eine Leitungsdurchführung, mit den folgenden Schritten:
a) einer ein Brandschutzmodul (42) bildende Brandschutzmatte (12) wird der Größe der Leitungsdurchführung entsprechend abgelängt, wobei die Brandschutzmatte (12) ein flexibles Trägerelement (28) aufweist, an dem ein, insbesondere kontinuierliches, Brandschutzband (30) aus einem intumeszierenden Material befestigt ist,
b) die Brandschutzmatte (12) wird rundgeformt, und die sich gegenüberliegenden Ränder (32, 34) der Brandschutzmatte (12) werden über ein Verbindungsmittel (40) miteinander verbunden, sodass ein Brandschutzmodul (42) ausgebildet ist, und
c) wenigstens ein separat von der Brandschutzmatte (12) ausgebildetes mechanisches Positionierungsmittel (14) wird an der Brandschutzmatte (12) befestigt, das derart eingerichtet ist, dass die Baugruppe (10) über das mechanische Positionierungsmittel (14) an einer Wand oder einer Schalung befestigbar ist.

2. Verfahren nach Anspruch 1, **dadurch gekennzeichnet, dass** die Brandschutzmatte (12) auf einer Rolle aufgerollt ist, von der sie zunächst abgerollt wird.

3. Verfahren nach Anspruch 1 oder 2, **dadurch gekennzeichnet, dass** die sich gegenüberliegenden Ränder (32, 34) des Brandschutzmoduls (42) über einen separaten Klebestreifen als Verbindungsmittel (40) miteinander verbunden werden.

4. Verfahren nach einem der vorhergehenden Ansprüche, **dadurch gekennzeichnet, dass** das Positionierungsmittel (14) ein flexibles Band (16) ist, an dem wenigstens ein Befestigungselement (18) vorgesehen ist, wobei das flexible Band (16) abgelängt wird, bevor das Positionierungsmittel (14) an der Brandschutzmatte (12) befestigt wird.

5. Baugruppe (10) für eine Leitungsdurchführung, insbesondere hergestellt nach einem der vorhergehenden Ansprüche, mit
wenigstens einem mechanischen Positionierungsmittel (14), das derart eingerichtet ist, dass die Baugruppe (10) über das wenigstens eine mechanische Positionierungsmittel (14) an einer Wand oder einer Schalung befestigbar ist, und
einem im Wesentlichen zylinderförmigen Brandschutzmodul (42), das ein flexibles Trägerelement (28) aufweist, an dem ein, insbesondere kontinuierliches, Brandschutzband (30) aus einem intumeszierenden Material befestigt ist,
wobei das Brandschutzmodul (42) zwei sich gegenüberliegende Ränder (32, 34) aufweist, die sich in Umfangsrichtung des Brandschutzmoduls (42) gegenüberliegen und über ein Verbindungsmittel (40) miteinander verbunden sind.

6. Baugruppe (10) nach Anspruch 5, **dadurch gekennzeichnet, dass** das Trägerelement (28) gegenüber dem Brandschutzband (30) an den sich gegenüberliegenden Rändern (32, 34) des Brandschutzmoduls (42) zurückgesetzt ist.

7. Baugruppe (10) nach Anspruch 5 oder 6, **dadurch gekennzeichnet, dass** zwischen dem Trägerelement (28) und dem Brandschutzband (30) wenigstens ein zusätzlicher intumeszierender Streifen (36, 38) vorgesehen ist, der insbesondere an einem der sich gegenüberliegenden Ränder (32, 34) des Brandschutzmoduls (42) vorgesehen ist und/oder über einen der Ränder (32, 34) des Trägerelements (28) übersteht.

8. Baugruppe (10) nach einem der Ansprüche 5 bis 7, **dadurch gekennzeichnet, dass** das Brandschutzband (30) aus Mineralwolle gefüllt mit Blähgraphit oder einem Brandschutzschaum besteht.

9. Baugruppe (10) nach einem der Ansprüche 5 bis 8, **dadurch gekennzeichnet, dass** das Positionierungsmittel (14) aus einem flexiblen Band (16) besteht, an dem wenigstens ein Befestigungselement (18) vorgesehen ist, das insbesondere hakenförmig oder als Winkelelement ausgebildet ist.

10. Baugruppe (10) nach einem der Ansprüche 5 bis 8, **dadurch gekennzeichnet, dass** das Positionierungsmittel (14) wenigstens eine, vorzugsweise aus zwei miteinander verbundenen Halbschalen gebildete Flanschhülse (20) aufweist, die insbesondere über eine Klips-, Schiebe- oder Schraubverbindung mit dem Brandschutzmodul (42) verbunden ist.

11. Baugruppe (10) nach Anspruch 10, **dadurch gekennzeichnet, dass** die Flanschhülse (20) als ein Deckelelement mit einer Sollbruchstelle ausgebildet ist, über die ein Verschlussteil herausgebrochen werden kann.

12. Baugruppe (10) nach einem der Ansprüche 5 bis 11, **dadurch gekennzeichnet, dass** die sich gegenüberliegenden Ränder (32, 34) des Brandschutzmoduls (42) über wenigstens einen Klebestreifen als Verbindungsmittel (40) miteinander verbunden sind, insbesondere wobei der wenigstens eine Klebestreifen an der zum Brandschutzband (30) entgegengesetzten Seite des Trägerelements (28) befestigt ist.

13. Baugruppe (10) nach einem der Ansprüche 5 bis 12, **dadurch gekennzeichnet, dass** das flexible Trägerelement (28) eine Folie ist, die insbesondere aus einem Kunststoff oder einem Metall besteht.

14. Baugruppe (10) nach einem der Ansprüche 5 bis 13, **dadurch gekennzeichnet, dass** die Baugruppe (10) derart eingerichtet ist, dass sie als Cast-In-, Drop-In- und Wall-Sleeve-Produkt verwendet werden kann.

15. Verfahren zur Herstellung einer Leitungsdurchführung mit einer Baugruppe (10) nach einem der Ansprüche 5 bis 14 in einem Bauteil (50), insbesondere einer Wand aus Beton,
wobei die Baugruppe (10) über das wenigstens eine Positionierungsmittel (14) an der Wand oder der Schalung befestigt wird und das Brandschutzmodul (42) beim Gießen des Bauteils (50) von dem das Bauteil (50) bildenden Gussmaterial, insbesondere von Beton, umschlossen wird
oder wobei die Baugruppe (10) in ein Loch oder eine Durchführung des Bauteils (50) eingesetzt und an der Baugruppe (10) über das wenigstens eine Positionierungsmittel (14) befestigt wird.
